# EUROPEAN PATENT APPLICATION

(11) **EP 3 553 934 A1**
(43) Date of publication of application: **16.10.2019**
(21) Application number: 17877859.3
(22) Date of filing: 04.12.2017
(51) Int. Cl.: H02M 3/28

(54) **POWER CONVERSION APPARATUS**

(30) Priority: 08.12.2016 JP 2016238510
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-0013 (JP)
(72) Inventor: NOGI, Masayuki, Tokyo 105-8001 (JP); MAKI, Koji, Tokyo 105-8001 (JP); SATAKE, Nobuhiko, Tokyo 105-8001 (JP)
(74) Representative: AWA Sweden AB
(86) International application number: PCT/JP2017/043505
(87) International publication number: WO 2018/105562

(57) **Abstract**

The power conversion device according to the embodiment includes a first plurality of power converters, a second plurality of power converters, and an insulation circuit. Each of the first plurality of power converters can be connected in series to the first power supply. The second plurality of power converters can be connected in parallel to a second power supply different from the first power supply. An insulation circuit connects between the first plurality of power converters and the second plurality of power converters.

## Description

### [Technical Field]

The present invention relates to a power conversion device.

### [Background Art]

In feeding systems of the related art, electrical storage devices are installed to reduce an overhead voltage or absorb surplus regenerated power. An electrical storage device includes a transformer that converts a storage cell voltage into any voltage to output the voltage. However, when a voltage on an overhead side is considerably higher than a voltage on a storage cell side, semiconductor elements with the same rated voltage are not applied to a primary side circuit connected to the overhead side and a secondary side circuit to which power is output from a transformer and an element rated voltage on the primary side connected to the overhead side inevitably increases. In this case, since cooling is difficult due to an increase in switching loss of the semiconductor elements, a switching frequency is lowered or a cooling capability of the transformer is enhanced. When the switching frequency is lowered, the size of a transformer of a high-frequency transformer increases in proportion to a reduction in frequency, thereby resulting in an increase in the physical size of the transformer. On the other hand, even when the cooling is enhanced, the volume of a cooling device inevitably increases, thereby resulting in an increase in the physical size of the transformer.

### [Citation List]

### [Patent Literature]

[Patent Literature 1]
Japanese Unexamined Patent Application, First Publication No. 2015-177559

### [Summary of Invention]

### [Technical Problem]

An object of the invention is to provide a power conversion device capable of achieving miniaturization.

### [Solution to Problem]

The power conversion device according to the embodiment includes a first plurality of power converters, a second plurality of power converters, and an insulation circuit. Each of the first plurality of power converters can be connected in series to the first power supply. The second plurality of power converters can be connected in parallel to a second power supply different from the first power supply. An insulation circuit connects between the first plurality of power converters and the second plurality of power converters.

### [Brief Description of Drawings]

Fig. 1 is a diagram illustrating an example of a power conversion device according to a first embodiment.
Fig. 2 is a diagram illustrating a configuration example of power converters 12-1 to 12-4.
Fig. 3 is a diagram illustrating an example of a power converter that includes a snubber capacitor.
Fig. 4 is a diagram illustrating an example of a power converter that includes a wide band gap semiconductor.
FIG. 5A is a diagram for illustrating voltages on the primary side and the secondary side for transformers 14-1 and 14-2.
FIG. 5B is a diagram illustrating an example in which the phase of the voltage Vtr2 on the secondary side is behind the phase of the voltage Vtr1 on the primary side.
FIG. 5C is a diagram illustrating an example in which the phase of the voltage Vtr2 on the secondary side leads the phase of the voltage Vtr1 on the primary side.
Fig. 6 is a diagram illustrating an example of a functional configuration of a controller 20.
Fig. 7 is a diagram illustrating an example of a functional configuration of a voltage calculator 21.
Fig. 8 is a diagram illustrating an example of a power conversion device according to a second embodiment.
Fig. 9 is a diagram illustrating an example of a power conversion device according to a third embodiment.
Fig. 10 is a diagram illustrating an example of a power conversion device according to a fourth embodiment.
Fig. 11 is a diagram illustrating a configuration example of transformers 14-1 and 14-2 according to a fifth embodiment.

### [Description of Embodiments]

Hereinafter, a power conversion device according to embodiments will be described with reference to the drawings. In addition, "connection" mentioned in the present specification also includes a case of meaning electric connection.

### (First embodiment)

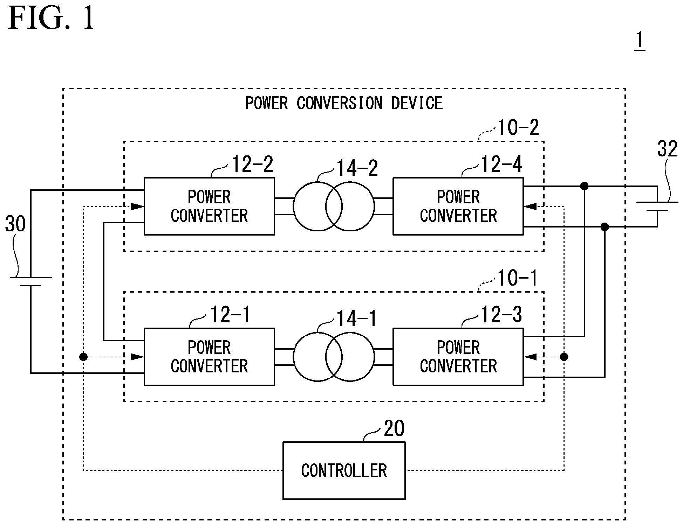

Fig. 1 is a diagram illustrating an example of a power conversion device according to a first embodiment. A power conversion device 1 is used for, for example, a stationary system for railway. The power conversion device 1 is, for example, a converter device capable of bidirectional power supply between a first direct-current power supply (a direct-current power supply 30) and a second direct-current power supply (a direct-current power supply 32).

The power conversion device 1 illustrated in Fig. 1 includes high-frequency insulation circuits 10-1 and 10-2 and a controller 20. The high-frequency insulation circuit 10-1 includes power converters 12-1 and 12-3 and a transformer 14-1. The power converters 12-1 and 12-3 are connected in series via the transformer 14-1. The high-frequency insulation circuit 10-2 includes power converters 12-2 and 12-4 and a transformer 14-2. The power converters 12-2 and 12-4 are connected in series via the transformer 14-2. The power converters 12-1 and 12-2 are examples of the "first plurality of power converters". The power converters 12-3 and 12-4 are examples of the "second plurality of power converters". The power converter 12-1 is an example of a "first power converter." The power converter 12-2 is an example of a "second power converter." The power converter 12-3 is an example of a "third power converter." The power converter 12-4 is an example of a "fourth power converter." Each of the transformer 14-1 and the transformer 14-2 forms an example of the "insulation circuit". In the first embodiment, bidirectional power interchange can be realized with a dual active bridge circuit using the high-frequency insulation circuits 10-1 and 10-2 illustrated in Fig. 1.

The power converters 12-1 and 12-2 are connected in series with each other, and can be connected in series to the direct-current power supply 30. The direct-current power supply 30 is, for example, an overhead wire. The voltage of the direct-current power supply 30 is, for example, about 1500 V. The direct-current power supply 30 is an example of a "first power supply."

The power converters 12-3 and 12-4 are connected in parallel with each other, and can be connected in parallel with the direct-current power supply 32. The direct-current power supply 32 is, for example, an energy storage element such as a storage cell. The voltage of the direct-current power supply 32 is, for example, about 750 V. The direct-current power supply 32 is an example of a "second power supply."

The transformers 14-1 and 14-2 are high-frequency transformers. A winding ratio of the transformers 14-1 and 14-2 is, for example, 1:1. The power converter 12-1 is connected to a primary side of the transformer 14-1 in series. The power converter 12-3 is connected to a secondary side of the transformer 14-1 in series. In other words, the power converters 12-1 and 12-3 are connected via the transformer 14-1. On the other hand, the power converter 12-2 is connected to a primary side of the transformer 14-2 in series. The power converter 12-4 is connected to a secondary side of the transformer 14-2 in series. In other words, the power converters 12-2 and 12-4 are connected via the transformer 14-2. In the first embodiment, for example, at least one of the power converters 12-1 to 12-4 is subjected to high-frequency switching, so that power is supplied from the direct-current power supply 30 to the direct-current power supply 32 or from the direct-current power supply 32 to the direct-current power supply 30. The transformers 14-1 and 14-2 insulate the primary-side circuit from the secondary-side circuit when the voltage of the direct-current power supply 30 and the voltage of the direct-current power supply 32 are balanced. The transformers 14-1 and 14-2 supply a voltage from the circuit with higher voltage to the circuit with lower voltage when the voltage of the direct-current power supply 30 and the voltage of the direct-current power supply 32 are not balanced.

The power converter 12-1 is connected to the power converter 12-2 in series. In this case, by halving a voltage apportionment to the power converters 12-1 and 12-2 in the direct-current power supply 30, it is possible to lower rated voltages of elements used in the power converters 12-1 and 12-2. By using the element with a lower rated voltage, it is possible to reduce a loss occurring at the time of switching. Since the switching loss can be reduced, a margin can be allowed for cooling in the power conversion device 1. Thus, the frequencies of the transformers 14-1 and 14-2 can be raised, and thus the physical sizes of the transformers 14-1 and 14-2 can be reduced. From another viewpoint, it is possible to achieve miniaturization of cooling devices that cool the power converters 12-1 to 12-4.

On the other hand, the power converters 12-3 and 12-4 connected to the side of the direct-current power supply 32 via the transformers 14-1 and 14-2 connected in parallel may satisfy an insulation rated value in accordance with the voltage of the direct-current power supply 32. For example, even when the voltage of the direct-current power supply 32 is set to 1100 V and the voltage of the direct-current power supply 30 reaches 900 V, power flow between the direct-current power supply 30 and the direct-current power supply 32 can be controlled.

The controller 20 controls a part or the entirety of the power conversion device 1. The controller 20 is realized by, for example, a processor such as a central processing unit (CPU) that executes a program, hardware such as a large scale integration (LSI), an application specific integrated circuit (ASIC), or a field-programmable gate array (FPGA), or a combination thereof. The details of a function of the controller 20 will be described later.

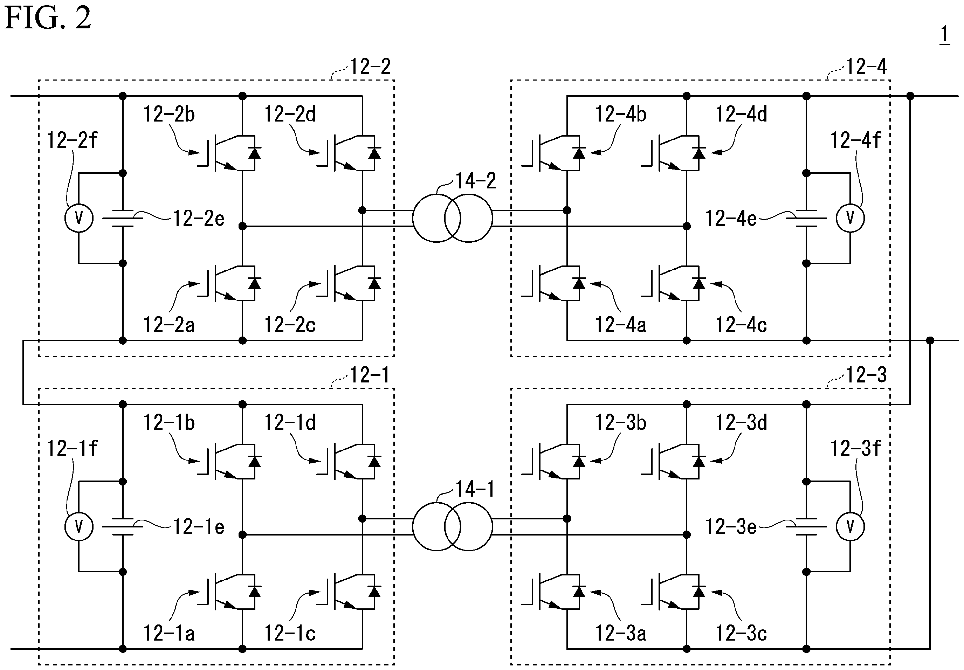

Next, the power converters 12-1 to 12-4 will be described specifically. Fig. 2 is a diagram illustrating a configuration example of the power converters 12-1 to 12-4. The power converters 12-1 to 12-4 illustrated in Fig. 2 have the same configuration. Therefore, a specific description will be made below using the power converter 12-1.

The power converter 12-1 includes, for example, four semiconductor switching elements 12-1a to 12-1d and a capacitor 12-1e. The four semiconductor switching elements 12-1a to 12-ld are a single-phase inverter of a full bridge. The semiconductor switching elements 12-1a to 12-1d are, for example, elements that can perform control of turning ON/OFF a current such as insulated gate bipolar transistors (IGBTs). The semiconductor switching elements 12-1a and 12-1b are connected in series. The transformer 14-1 connects the semiconductor switching element 12-a to the semiconductor switching element 12-1b. The semiconductor switching elements 12-1c and 12-1d are connected to each other in series. The transformer 14-1 connects the semiconductor switching element 12-c to the semiconductor switching element 12-1d. The semiconductor switching elements 12-1a and 12-1b are connected to the semiconductor switching elements 12-1c and 12-1d in parallel.

The capacitor 12-1e is provided to be closer to the side of the direct-current power supply 30 than the inverter circuit of the four semiconductor switching elements 12-1a to 12-1d is. The capacitor 12-1e charges or discharges electricity. The capacitor 12-1e may perform a process of stabilizing a voltage or removing noise. Since the capacitor 12-1e is provided to reduce a loss of the semiconductor switching elements 12-1a to 12-1d, an amount of heat can be suppressed.

The power converter 12-1 may include a voltage detector 12-1f that detects the voltage of the capacitor 12-1 e. A voltage value detected by the voltage detector 12-1f is output to the controller 20. The capacitor 12-1e of the power converter 12-1 and the capacitor 12-2e of the power converter 12-2 are connected to each other in series. The capacitor 12-3e of the power converter 12-3 and the capacitor 12-4e of the power converter 12-4 are connected to each other in parallel.

Here, the semiconductor switching elements 12-1a to 12-ld may be metal-oxide-semiconductor field-effect transistors (MOSFETs) instead of IGBTs.

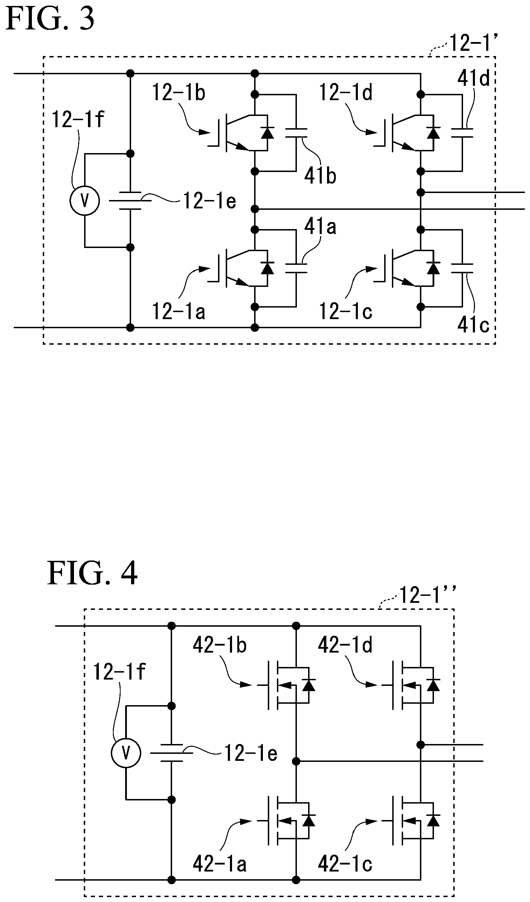

The power converters 12-1 to 12-4 may include snubber capacitors with regard to the semiconductor switching element provided in each unit. Fig. 3 is a diagram illustrating an example of a power converter that includes a snubber capacitor. In the example of Fig. 3, a portion of a power converter 12-1' corresponding to the power converter 12-1 is schematically illustrated. In the example of Fig. 3, snubber capacitors 41a to 41d are connected to each other in parallel in the semiconductor switching elements 12-1a to 12-1d. By providing the snubber capacitors 41a to 41d, a switching loss of the elements can be suppressed.

Further, in the first embodiment, a wide band gap semiconductor such as silicon carbide (SiC) may be used for the semiconductor switching element. Fig. 4 is a diagram illustrating an example of a power converter that includes a wide band gap semiconductor. In the example of Fig. 4, a portion of a power converter 12-1" corresponding to the power converter 12-1 is schematically illustrated. The wide band gap semiconductor is a semiconductor with a large band gap. For example, a wide band gap is a band gap equal to or greater than about 2.2 [eV]. The wide band gap semiconductor contains, for example, a group III or V semiconductor.

In the example of Fig. 4, wide band gap semiconductors 42-1a to 42-1d are installed in similar disposition to the semiconductor switching elements 12-1a to 12-1d of the IGBTs described above.

By including the wide band gap semiconductors 42-1a to 42-1d, it is possible to achieve miniaturization of the device by a higher frequency or a lower loss. In the first embodiment, different semiconductor switching elements may be used for the power converters 12-1 to 12-4. For example, when the voltage of the direct-current power supply 30 is higher than that of the direct-current power supply 32, elements with better insulation properties than those for the secondary-side semiconductor switching elements of the power converters 12-1 and 12-2 are used for the primary-side semiconductor switching elements of the power converters 12-1 and 12-2. Different elements may be included for the plurality of semiconductor switching elements included in the power converters 12-1 to 12-4.

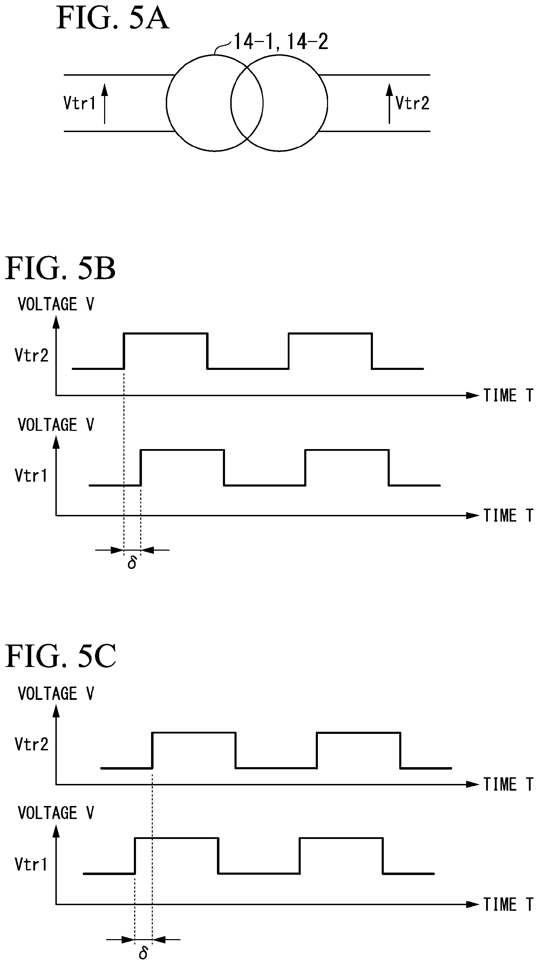

Next, an aspect of power supply to the direct-current power supply 30 and the direct-current power supply 32 will be described. FIG. 5A is a diagram for describing voltages on the primary side and the secondary side for the transformers 14-1 and 14-2. Here, as illustrated in FIG. 5A, the voltage on the primary side of each of the transformers 14-1 and 14-2 is Vtrl, and the voltage on the secondary side is Vtr2. As illustrated in FIGS. 5B and 5C, each of voltages Vtr1 and Vtr2 outputs alternating-current pulse voltages at time T.

FIG. 5B is a diagram illustrating an example in which the phase of the voltage Vtr2 on the secondary side is behind the phase of the voltage Vtr1 on the primary side. In the example of FIG. 5B, the phase of the voltage Vtr2 on the secondary side is delayed by δ [rad] with respect to the voltage Vtr1 on the primary side of the transformers 14-1 and 14-2. In this case, the power conversion device 1 supplies power from the direct-current power supply 30 to the direct-current power supply 32 based on a difference in the phase.

FIG. 5C is a diagram illustrating an example in which the phase of the voltage Vtr2 on the secondary side leads the phase of the voltage Vtr1 on the primary side. In the example of FIG. 5C, the phase of the voltage Vtr2 on the secondary side is advanced by δ [rad] with respect to the voltage Vtr1 on the primary side of the transformers 14-1 and 14-2. In this case, the power conversion device 1 supplies power from the direct-current power supply 32 to the direct-current power supply 30 based on a difference in the phase. Here, supply power Pnc output from the first power supply 30 to the second power supply 32 is expressed as "P_{DC}=(E1×E2/ω)L)×(δ_δ²/π)."

In the above-described expression of the supply power P_{DC}, E1 is, for example, a voltage of the capacitor 12-1e of the power converter 12-1 or the capacitor 12-2e of the power converter 12-2 connected to the direct-current power supply 30. E2 is a voltage of the capacitor 12-3e of the power converter 12-3 or the capacitor 12-4e of the power converter 12-4 connected to the direct-current power supply 32. Here, ω is an angular frequency and is expressed in ω=2πf. In this case, f is a frequency which the controller 20 applies to the transformers 14-1 and 14-2. L is a value obtained by adding leakage inductance of the transformers 14-1 and 14-2 and conductor inductance from the power converters 12 to the transformers 14. In addition, δ is a phase difference [rad] between the voltages output by the power converters 12-3 and 12-4 connected to the direct-current power supply 32 on the basis of an alternating current output to the transformers 14-1 and 14-2 by the power converters 12-1 and 12-2 connected to the direct-current power supply 30.

For example, when voltage apportionment to the power converters 12-1 and 12-2 connected to the side of the direct-current power supply 30 is biased, there is a possibility of an element withstand pressure being insufficient, which leads to element failure. Therefore, in the first embodiment, voltage apportionment between a capacitor voltage Vdc1 of the power converter 12-1 and a capacitor voltage Vdc2 of the power converter 12-2 connected to the direct-current power supply 30 is managed.

The controller 20 performs control such that the above-described voltage apportionment is substantially uniform. For example, the controller 20 controls at least one of the power converters 12-1 and 12-2 such that a difference in each voltage decreases based on the voltage of the capacitor 12-1e of the power converter 12-1 and the voltage of the capacitor 12-2e of the power converter 12-2.

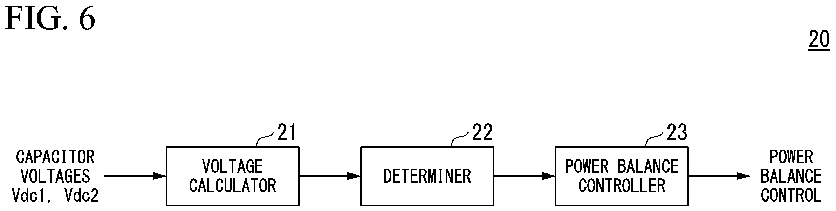

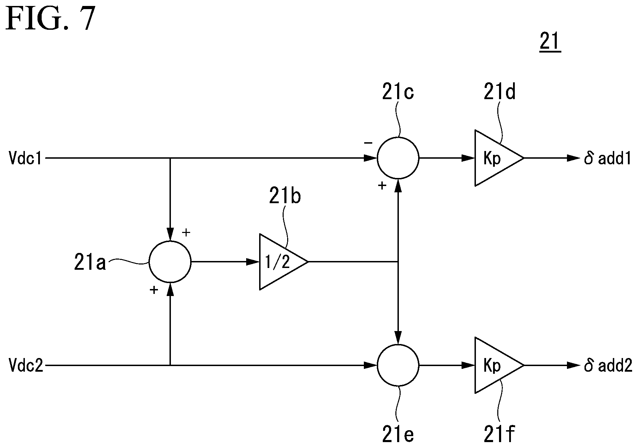

Here, the details of the function of the controller 20 will be described with reference to the drawings. Fig. 6 is a diagram illustrating an example of a functional configuration of the controller 20. In the example of Fig. 6, the controller 20 includes a voltage calculator 21, a determiner 22, and a power balance controller 23. The voltage calculator 21 inputs the capacitor voltages Vdc1 and Vdc2 of the power converters 12-1 and 12-2 and performs voltage calculation based on the input capacitor voltages Vdc1 and Vdc2. Fig. 7 is a diagram illustrating an example of a functional configuration of the voltage calculator 21. The voltage calculator 21 illustrated in Fig. 7 includes, for example, calculators 21a, 21c, and 21e and amplifiers 21b, 21d, and 21f.

In the example of Fig. 7, the capacitor voltage Vdc1 is a voltage value detected by at least one of a voltage detector 12-If of the power converter 12-1 and a voltage detector 12-2f of the power converter 12-2. The capacitor voltage Vdc2 is a voltage value detected by at least one of a voltage detector 12-3f of the power converter 12-3 and a voltage detector 12-4f of the power converter 12-4. The calculator 21a adds the capacitor voltages Vdc1 and Vdc2. The amplifier 21b multiplies a value obtained by the calculator 21a by 1/2. An average capacitor voltage is calculated through a process of the calculator 21a and the amplifier 21b.

Subsequently, the calculator 21c calculates a difference between the capacitor voltage Vdc1 and the average capacitor voltage output from the amplifier 21b. The amplifier 21d multiplies the difference value calculated by the calculator 21c by a predetermined control gain Kp and outputs a difference voltage value δadd1. The calculator 21 e calculates a difference between the capacitor voltage Vdc2 and the average capacitor voltage output from the amplifier 21b. The amplifier 21f multiplies the value calculated by the calculator 21e by the predetermined control gain Kp and outputs a difference voltage value δadd2.

In the voltage calculator 21, primary delay circuits may be further provided between the calculator 21c and the amplifier 21d and between the calculator 21e and the amplifier 21f in the configuration example of Fig. 7. By providing the primary delay circuits, it is possible to slacken a response to the power balance control.

The determiner 22 adds the difference voltage value δadd1 calculated by the voltage calculator 21 to the phase control value δ controlled in the high-frequency insulation circuits 10-1 and 10-2 and obtains values (δ+δadd1, δ+δadd2) obtained through the addition. Based on this result, for example, the determiner 22 determines whether the capacitor voltage Vdc1 is higher or lower than an average value.

Then, when the capacitor voltage Vdc1 is higher than the average value, the determiner 22 determines that the balance control is performed in a direction in which the capacitor voltage Vdc1 decreases, that is, a direction in which the power supply from the direct-current power supply 30 to the direct-current power supply 32 increases. Conversely, when the capacitor voltage Vdc1 is lower than the average value, the determiner 22 determines that the balance control is performed in a direction in which the second capacitor voltage decreases, that is, a direction in which the power is supplied from the direct-current power supply 32 to the direct-current power supply 30.

The power balance controller 23 performs power balance control based on the result determined by the determiner 22. For example, based on the result determined by the determiner 22, the power balance controller 23 performs voltage control on at least one of the power converters 12-1 to 12-4. Thus, adjustment can be realized so that the voltages of the high-frequency insulation circuits 10-1 and 10-2 connected in series are equalized.

As described above, according to the first embodiment, the switching loss of the elements can be suppressed by performing the voltage apportionment. Therefore, an amount of heat of the elements can be reduced and equipment such as a cooling device can be miniaturized. In addition, although the conventional transformer increases in size in proportion to the decrease in frequency, in the first embodiment, by using an element having a small switching loss, it is possible to afford a cooling performance of equipment such as a cooling device. Therefore, the power converter 12 can increase the output frequency and can miniaturize the size of the transformer 14.

Accordingly, it is possible to miniaturize the power conversion device 1 that is connected to power sources of an arbitrary input voltage and output voltage and controls power flow. Further, according to the first embodiment, it is possible to achieve noise reduction through high-frequency insulation.

### (Second embodiment)

Next, a second embodiment will be described. In the following description, the same names and reference numerals are given to constituents similar to those of the above-described first embodiment and a specific description thereof will be omitted.

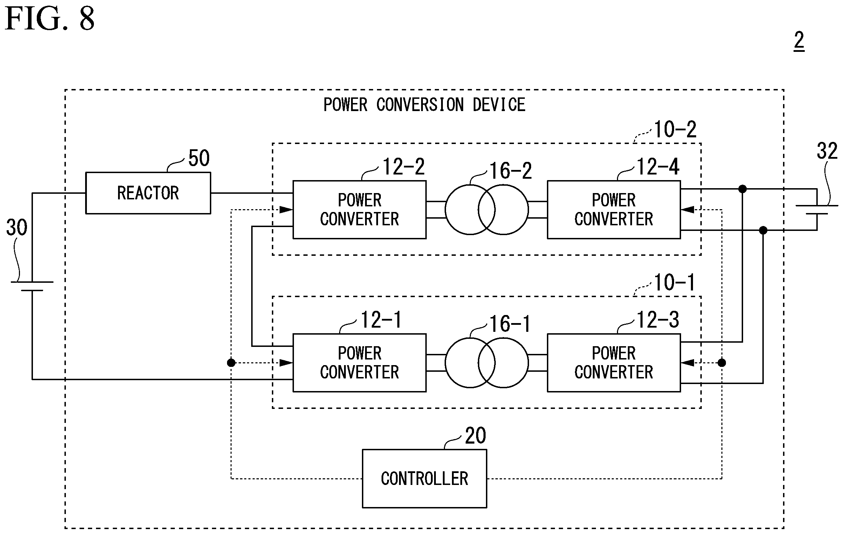

Fig. 8 is a diagram illustrating an example of a power conversion device according to a second embodiment. A power conversion device 2 illustrated in Fig. 8 includes high-frequency insulation circuits 10-1 and 10-2, a controller 20, and a reactor 50. When the second embodiment is compared with the above-described first embodiment, the reactor 50 is included. Accordingly, in the following description, the reactor 50 will be described.

The reactor 50 is connected to a positive pole side of the direct-current power supply 30 and the power converter 12-2.

Accordingly, in the power conversion device 2, the reactor 50 and the capacitors 12-1e to 12-4e included in the power converter 12 form an LC filter. Thus, it is possible to suppress outflow to the direct-current power supply 30 of a high-frequency current component.

As described above, according to the second embodiment, the reactor 50 and the capacitors 12-1e to 12-4e can absorb higher harmonic waves, and thus it is possible to reduce an adverse influence on other configurations in the power conversion device 2.

### (Third embodiment)

Next, a third embodiment will be described. In the following description, the same names and reference numerals are given to constituents similar to those of the above-described first embodiment and a specific description thereof will be omitted.

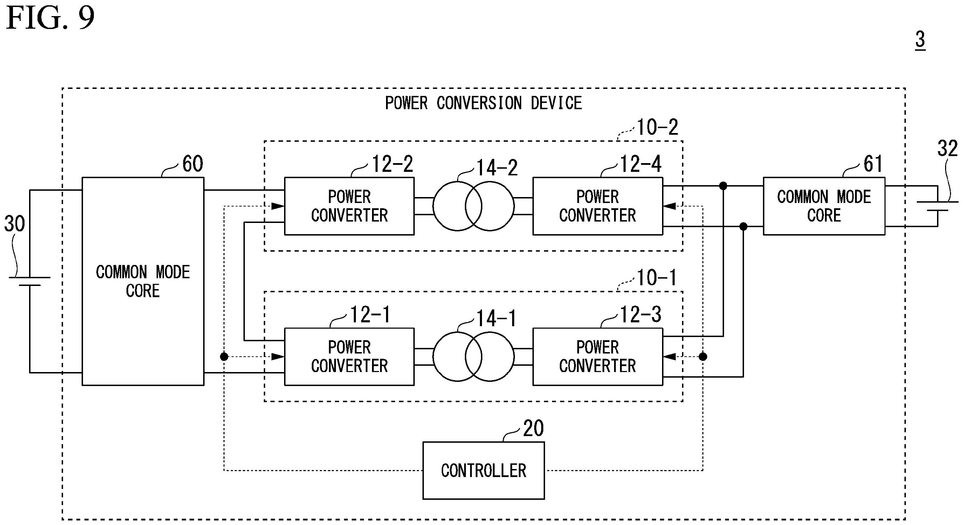

Fig. 9 is a diagram illustrating an example of a power conversion device according to a third embodiment. A power conversion device 3 illustrated in Fig. 9 includes the high-frequency insulation circuits 10-1 and 10-2, the controller 20, and common mode cores 60 and 61. When the third embodiment is compared to the above-described first embodiment, the power conversion device 3 includes two common mode cores 60 and 61. Accordingly, in the following description, the two common mode cores 60 and 61 will be described.

The common mode core 60 is connected in parallel between the direct-current power supply 30 and the power converters 12-1 and 12-2. The common mode core 62 is connected in parallel between the direct-current power supply 32 and the power converters 12-3 and 12-4. The common mode cores 60 and 61 are, for example, common mode chokes.

The common mode core 60 suppresses a common mode current which flows out to the direct-current power supply 30. The common mode core 61 suppresses a common mode current which flows out to the direct-current power supply 32.

As described above, according to the third embodiment, the direct-current power supply 30 and the direct-current power 32 can perform stable power supply without being influenced by the common mode current. Accordingly, the power conversion device 3 can appropriately perform voltage apportionment. By performing countermeasures against the common mode current, it is possible to use a high-speed switching element such as SiC. Therefore, since a switching loss can be suppressed to reduce an amount of heat of the element, it is possible to miniaturize equipment such as a cooling device.

### (Fourth embodiment)

Next, a fourth embodiment will be described. In the following description, the same names and reference numerals are given to constituents similar to those of the above-described third embodiment and a specific description thereof will be omitted.

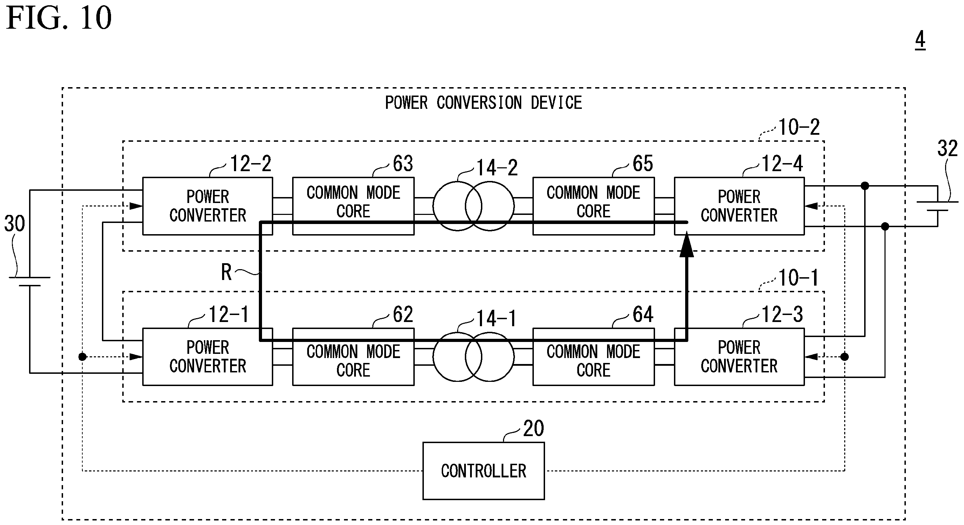

Fig. 10 is a diagram illustrating an example of a power conversion device according to the fourth embodiment. In a power conversion device 4 illustrated in Fig. 10, connection positions of common mode cores are different compared to the above-described third embodiment. The power conversion device 4 illustrated in Fig. 10 include the high-frequency insulation circuits 10-1 and 10-2, the controller 20, and common mode cores 62 to 65. In the example of Fig. 10, the common mode core 62 is installed on the primary side of the transformer 14-1 and the common mode core 63 is installed on the secondary side thereof.

The common mode core 64 is installed on the primary side of the transformer 14-2 and the common mode core 65 is installed on the secondary side thereof.

As described above, according to the fourth embodiment, by realizing the configuration illustrated in Fig. 10, it is possible to suppress the common mode current as in the third embodiment. In the fourth embodiment, the power conversion device 4 has the common mode cores 62 to 65 installed at four positions. However, for example, since the common mode current on a current route indicated by a route R illustrated in Fig. 10 may be attenuated, at least one common mode core may be installed among the common mode cores 62 to 65.

### (Fifth embodiment)

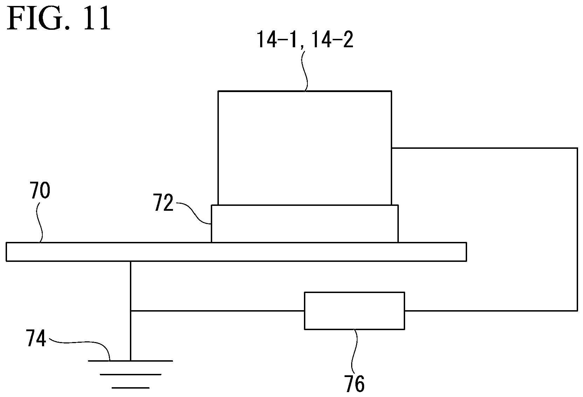

Next, a fifth embodiment will be described. In the fifth embodiment, portions other than the transformers 14-1 and 14-2 in the above-described first to fourth embodiments have similar configurations. Therefore, a configuration of portions of the transformers 14-1 and 14-2 will be described. Fig. 11 is a diagram illustrating a configuration example of the transformers 14-1 and 14-2 according to a fifth embodiment. In the example of Fig. 11, an insulator 72 is included between the transformers 14-1 and 14-2 and a casing 70 of the power conversion devices 1 to 4 in the first to fourth embodiments. In other words, the transformers 14-1 and 14-2 are installed in the casing 70 with the insulator 72 interposed therebetween. In the example of Fig. 11, to facilitate the description, a part of the casing of the power conversion devices 1 to 4 in the first to fourth embodiments is illustrated. The casing 70 is connected to an earth 74 and the transformers 14-1 and 14-2 are connected to the earth 74 via an inductor 76.

As described above, according to the fifth embodiment, by insulating the transformers 14-1 and 14-2 from the casing 70 by the insulator 72, it is possible to suppress outflow of a common mode current to the casing (earth) side of the power conversion devices 1 to 4. Thus, electromagnetic induction interference in the power conversion device is reduced, and thus the device can be operated stably.

In the embodiment of the power conversion device, for example, parts or all of the first to fifth embodiments may be combined without being limited to the above-described first to fifth embodiments. In each of the above-described embodiments, the control or the like of the voltage apportionment to the two high-frequency insulation circuits 10-1 and 10-2 has been described, but the present invention is not limited thereto. For example, three or more high-frequency insulation circuits may be provided in accordance with voltage values of the direct-current power supply 30 and the direct-current power supply 32 and the controller 20 may perform control of each voltage apportionment. For example, when the direct-current power supply 30 is about 3000 V, four high-frequency insulation circuits may be included.

According to at least one embodiment described above, the power conversion devices 1 (2 to 4) are the first plurality of power converters (power converters 12-1 and 12-2), and A first plurality of power converters connectable in series to the first power supply 30 and a plurality of second power converters (power converters 12-3 and 12-4), each of which is the first power converter; A second plurality of power converters connectable in parallel to a second power supply 32 different from the power supply 30, the first plurality of power converters, and the second plurality of power converters by having the insulating circuit (transformer 14) which connects between, size reduction of a power converter device can be achieved.

While preferred embodiments of the present invention have been described and illustrated above, it should be understood that the embodiments are exemplary and are not to be intended to limit the present invention. Various omission and substitutions of the embodiments can be made in various forms without departing from the gist of the present invention. Accordingly, the embodiments and their modifications are included in the invention and equivalents described in the claims as long as the embodiments and their modification are included in the scope or gist of the present invention.

## Claims

1. A power conversion device comprising:
a first plurality of power converters that are connected in series to each other with respect to a first power supply;
a second plurality of power converters that are connected in parallel to each other with respect to a second power supply different from the first power supply; and
insulation circuits that connect the first plurality of power converters and the second plurality of power converters to each other.

2. The power conversion device according to claim 1,
wherein the first plurality of power converters include a first power converter and a second power converter,
wherein the second plurality of power converters include a third power converter and a fourth power converter, and
wherein the first power converter is connected to the third power converter via the insulation circuit and the second power converter is connected to the fourth power converter via the insulation circuit.

3. The power conversion device according to claim 2, further comprising:
a controller that controls phases of voltages output by the first power converter and the third power converter and voltages output by the second power converter and the fourth power converter and controls a supply state of power between the first power supply and the second power supply.

4. The power conversion device according to any one of claims 1 to 3, wherein a reactor is connected between the first power supply and at least one power converter among the first plurality of power converters.

5. The power conversion device according to claim 2 or 3, wherein at least one of the first power converter, the second power converter, the third power converter, and the fourth power converter includes a wide band gap semiconductor.

6. The power conversion device according to claim 2 or 3,
wherein at least one of the first power converter, the second power converter, the third power converter, and the fourth power converter includes an IGBT element, and
wherein a snubber capacitor is connected to the IGBT element in parallel.

7. The power conversion device according to claim 3,
wherein each of the first power converter and the second power converter includes a capacitor, and
wherein, based on a voltage of the capacitor of the first power converter and a voltage of the capacitor of the second power converter, the controller controls at least one of the first power converter and the second power converter so that a difference between the voltage of the capacitor of the first power converter and the voltage of the capacitor of the second power converter decreases.

8. The power conversion device according to claim 7,
wherein the capacitor of the first power converter and the capacitor of the second power converter are connected to each other in series, and
wherein, based on comparison between an average value of the voltages of the capacitor of the first power converter and the capacitor of the second power converter and at least one of the voltage of the capacitor of the first power converter and the voltage of the capacitor of the second power converter, the controller controls at least one of the first power converter and the second power converter so that a difference between the voltage of the capacitor of the first power converter and the voltage of the capacitor of the second power converter decreases.

9. The power conversion device according to claim 8, wherein the controller compares the average value of the voltages of the capacitor of the first power converter and the capacitor of the second power converter with the voltage of the capacitor of the first power converter, performs control such that power supply from the first power supply to the second power supply decreases through the first power converter when the voltage of the capacitor of the first power converter is lower than the average value, and performs control such that the power supply from the first power supply to the second power supply increases through the first power converter when the voltage of the capacitor of the first power converter is higher than the average value.

10. The power conversion device according to any one of claims 1 to 9, further comprising:
a common mode core that is provided on at least one side between the first power supply and the plurality of power converters connected in series, between the second power supply and the plurality of power converters connected in parallel, between the insulation circuit and the plurality of power converters connected in series, and between the insulation circuit and the plurality of power converters connected in parallel.

11. The power conversion device according to any one of claims 1 to 10,
wherein the insulation circuit is installed between an insulator and a casing of the power conversion device, and
wherein an earth on a casing side of the insulation circuit is connected to an earth via an inductor.

12. The power conversion device according to any one of claims 1 to 11, wherein each of the first plurality of power converters and the second plurality of power converters is a single-phase inverter.
